# EUROPEAN PATENT SPECIFICATION

(11) **EP 4 525 143 B1**
(45) Date of publication and mention of the grant of the patent: **04.02.2026**
(21) Application number: 24193920.6
(22) Date of filing: 09.08.2024
(51) Int. Cl.: H01M 10/6554, H01M 10/6556, H01M 10/6567, H01M 50/209, H01M 50/249, H01M 50/262, H01M 50/264, H01M 50/358

(54) **BATTERY CELL ASSEMBLY AND BATTERY PACK INCLUDING THE SAME**
BATTERIEZELLENANORDNUNG UND BATTERIEPACK DAMIT
ENSEMBLE ÉLÉMENT DE BATTERIE ET BLOC-BATTERIE LE COMPRENANT

(30) Priority: 14.09.2023 KR 20230122363
(43) Date of publication of application: 19.03.2025
(73) Proprietor: LG Energy Solution, Ltd., Seoul 07335 (KR)
(72) Inventor: JANG, Sung Hwan, 34122 Daejeon (KR); KIM, Gwan Woo, 34122 Daejeon (KR); KIM, Min Sung, 34122 Daejeon (KR); KIM, Jae Wook, 34122 Daejeon (KR)
(74) Representative: Plasseraud IP

(56) References cited:
- EP-A1- 4 199 215
- WO-A1-2022/223892
- CN-A- 113 994 524
- CN-A- 116 057 768
- US-A1- 2022 361 367

## Description

### BACKGROUND

### 1. Field of the Invention

The present invention relates to a battery cell assembly and a battery pack including the same.

### 2. Discussion of Related Art

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

As secondary batteries are used for mobility, the demand for the safety of secondary batteries is increasing. A driver's life may be in danger when an accident such as fire occurs in a secondary battery used for mobility and thus research on technology for enhancing the safety of secondary batteries is indispensable.

Examples of background art can be found in KR20230104442A, KR102218473B1, KR20220169831A1, KR20230028037A, US2022/361367A1 and EP4199215A1.

### SUMMARY OF THE INVENTION

The present invention is directed to providing a battery cell assembly with improved safety and a battery pack.

The invention according to the independent claim 1 provides a battery cell assembly including a cell block with a plurality of battery cells and a case configured to accommodate the cell block, and the case includes an upper cover plate facing an upper side of the cell block and including a first cooling channel configured such that a first fluid flows therethrough, and a lower cover plate facing a lower side of the cell block and including a venting hole and a second cooling channel configured such that a second fluid flows therethrough. The first cooling channel is thus provided in the form of a passage for a first fluid. Similarly, the second cooling channel is provided in the form of a passage for a second fluid. The upper cover plate further includes a protruding part protruding from a side of the cell block. The battery cell assembly further includes a first pipe connected to a first upper port on a lower side of the protruding part and configured to transfer the first fluid. The first pipe includes a first part extending downward from the first upper port of the upper cover plate, a second part extending from the first part in a direction crossing a direction in which the first part extends, and a third part extending upward from the second part.

The battery cell assembly according to the invention may comprise one or more of the following features, in any technically feasible combination.

In example embodiments, a part of the lower side of the cell block may be exposed to the outside through the venting hole of the lower cover plate.

In example embodiments, the upper cover plate may further include a venting hole.

In example embodiments, a part of the upper side of the cell block may be exposed to the outside through the venting hole of the upper cover plate.

In example embodiments, the battery cell assembly may further include a first bottom support provided below the second part of the first pipe.

In example embodiments, the first bottom support may be configured to support the second part of the first pipe.

In example embodiments, the battery cell assembly may further include a first elastic pad provided between the second part of the first pipe and the first bottom support.

In example embodiments, an upper end of the third part of the first pipe may be an end of the first pipe.

In example embodiments, the upper end of the third part of the first pipe may be located below the first upper port of the upper cover plate.

In example embodiments, the battery cell assembly may further include a second pipe connected to a second upper port on the lower side of the protruding part of the upper cover plate and configured to transfer the first fluid.

In example embodiments, one of the first pipe and the second pipe may be configured to transfer the first fluid supplied from the outside to the first cooling channel of the upper cover plate, and the other of the first pipe and the second pipe may be configured to transfer the first fluid discharged from the first cooling channel of the upper cover plate to the outside.

**In** example embodiments, the second pipe may include a fourth part extending downward from the second upper port of the upper cover plate, a fifth part extending from the fourth part in a direction crossing a direction in which the fourth part extends, and a sixth part extending upward from the fifth part.

**In** example embodiments, an upper end of the sixth part of the second pipe may be an end of the second pipe and be located below the second upper port of the upper cover plate.

**In** example embodiments, the battery cell assembly may further include a second bottom support provided below the fifth part of the second pipe and configured to support the fifth part of the second pipe.

**In** example embodiments, the battery cell assembly may further include a second elastic pad provided between the fifth part of the second pipe and the second bottom support.

**In** example embodiments, the lower cover plate may further include a protruding part protruding from a side of the cell block.

**In** example embodiments, an upper end of the protruding part of the lower cover plate may be provided with a first lower port into which the second fluid is introduced and a second lower port from which the second fluid is discharged.

**In** example embodiments, the case may further include a side cover plate facing a lateral side of the cell block.

**In** example embodiments, the side cover plate may be coupled to the upper cover plate and the lower cover plate.

**In** example embodiments, the side cover plate may include a fastening flange configured to be fastened to an external support structure.

Another aspect of the present invention provides a battery pack including a pack housing, and a battery cell assembly accommodated in the pack housing, and including a cell block with a plurality of battery cells and a case configured to accommodate the cell block, and the case includes an upper cover plate facing an upper side of the cell block and including a first cooling channel configured such that a first fluid flows therethrough, and a lower cover plate facing a lower side of the cell block, and including a venting hole and a second cooling channel configured such that a second fluid flows therethrough.

In example embodiments, the case may further include a side cover plate facing a lateral side of the cell block.

In example embodiments, the side cover plate may include a fastening flange configured to be fastened to a support structure on a bottom wall of the pack housing.

In example embodiments, the lower cover plate of the battery cell assembly may be spaced apart from the bottom wall of the pack housing with a first space interposed therebetween.

In example embodiments, the lower side of the cell block may be exposed toward the first space through the venting hole.

In example embodiments, the upper cover plate may further include a protruding part protruding from a side of the cell block.

In example embodiments, the battery cell assembly may further include a first pipe connected to a first upper port on a lower side of the protruding part and configured to transfer the first fluid supplied from the outside to the first cooling channel.

In example embodiments, the battery cell assembly may further include a second pipe connected to a second upper port on the lower side of the protruding part of the upper cover plate and configured to transfer the first fluid discharged from the first cooling channel to the outside.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a perspective view of a battery cell assembly according to example embodiments of the present invention;
FIG. 2 is a perspective view of a battery cell assembly according to example embodiments of the present invention;
FIG. 3 is a cross-sectional view of a battery cell assembly according to example embodiments of the present invention;
FIG. 4 is a conceptual view schematically illustrating a flow path of a first fluid in an upper cover plate of the battery cell assembly of FIG. 1;
FIG. 5A is a conceptual view schematically illustrating a flow path of a second fluid in a lower cover plate of the battery cell assembly of FIG. 1;
FIG. 5B is a cross-sectional view of the lower cover plate of the battery cell assembly of FIG. 1;
FIG. 6 is a perspective view of a first pipe of the battery cell assembly of FIG. 1;
FIG. 7 is a perspective view of a second pipe of the battery cell assembly of FIG. 1;
FIG. 8 is a side view schematically illustrating a part of the battery cell assembly of FIG. 1;
FIG. 9 is a cross-sectional view of a battery cell assembly according to example embodiments of the present invention;
FIG. 10 is a cross-sectional view of a battery pack according to example embodiments of the present invention; and
FIG. 11 is a schematic view of an electric vehicle in which a battery pack according to example embodiments of the present invention is mounted.

### DETAILED DESCRIPTION OF EXEMPLARY EMBODIMENTS

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts matching corresponding to the present invention on the basis of the principle that the inventor(s) of the application can appropriately define the terms or expressions to optimally explain the present invention. The invention is defined in the appended claims.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

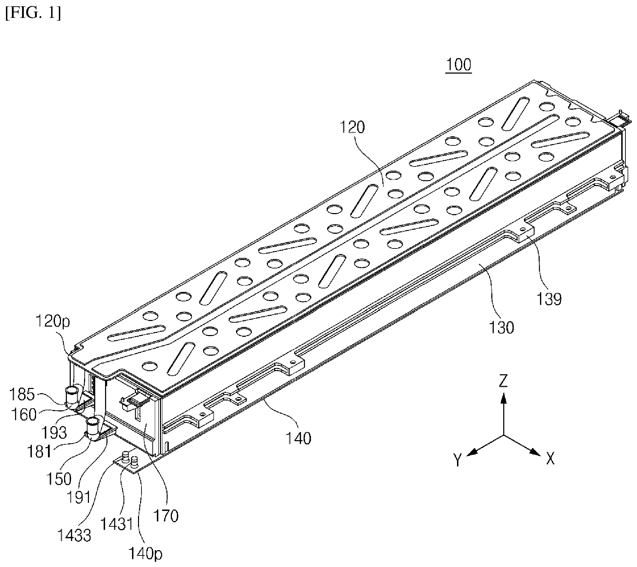

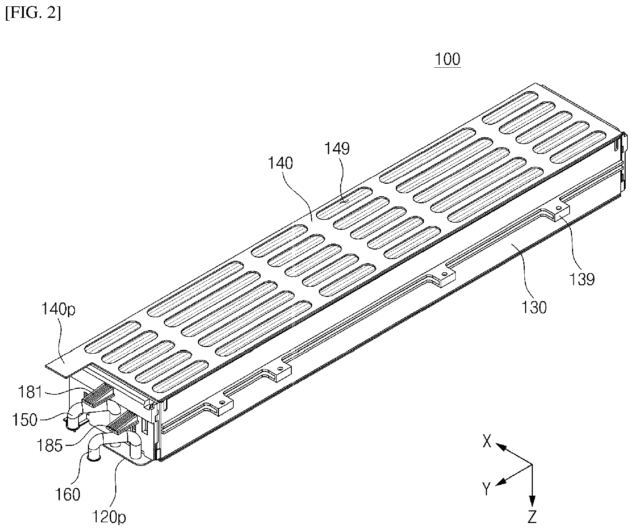

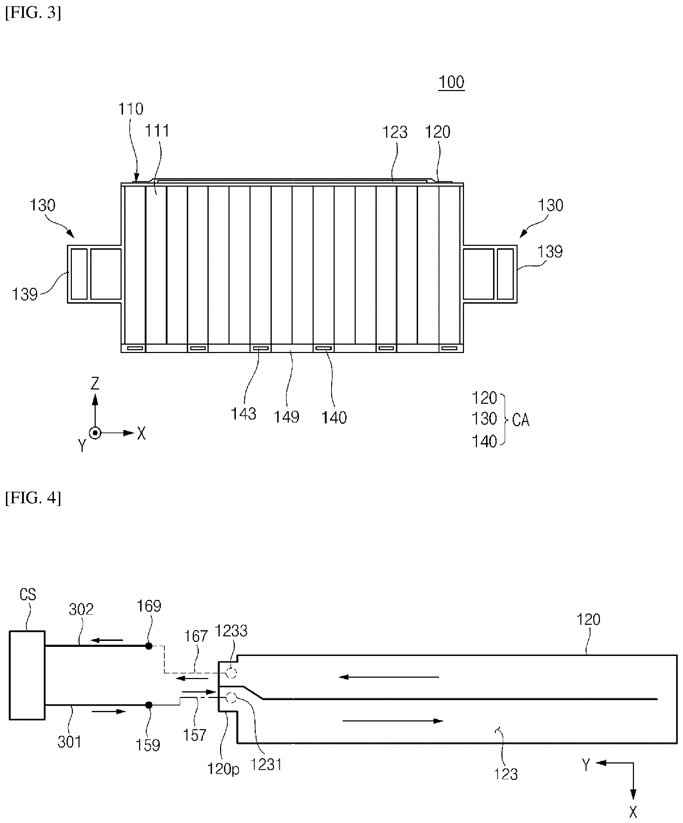

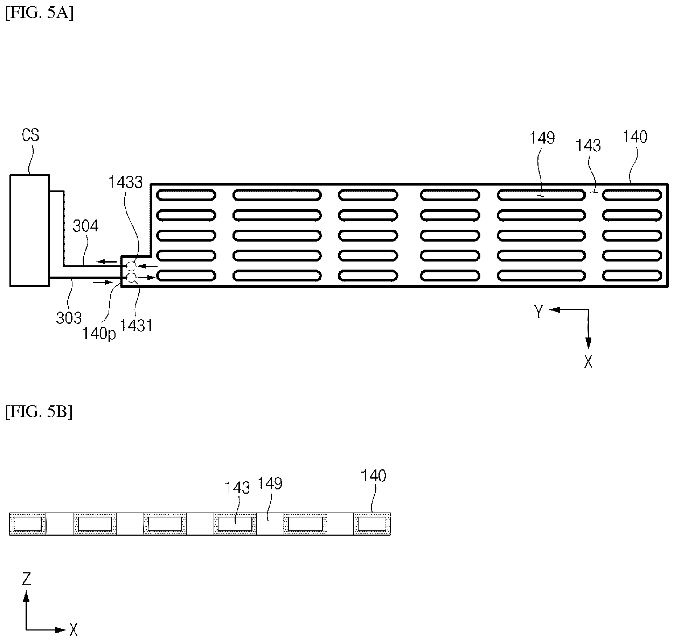

FIGS. 1 and 2 are perspective views of a battery cell assembly 100 according to example embodiments of the present invention. FIGS. 1 and 2 illustrate the battery cell assembly 100 viewed from different directions. FIG. 3 is a cross-sectional view of the battery cell assembly 100 according to example embodiments of the present invention. FIG. 4 is a conceptual view schematically illustrating a flow path of a first fluid in an upper cover plate 120 of the battery cell assembly 100 of FIG. 1. FIG. 5A is a conceptual view schematically illustrating a flow path of a second fluid in a lower cover plate 140 of the battery cell assembly 100 of FIG. 1. FIG. 5B is a cross-sectional view of the lower cover plate 140 of the battery cell assembly 100 of FIG. 1.

In accordance with claim 1, the battery cell assembly 100 includes a cell block 110, the upper cover plate 120, the lower cover plate 140. Referring to FIGS. 1 to 5B, the battery cell assembly 100 may further include side cover plates 130, and end plates 170. The upper cover plate 120, and the lower cover plate 140, and optionally the side cover plates 130, may form a case CA of the battery cell assembly 100 surrounding the cell block 110.

The cell block 110 includes a plurality of battery cells 111. Each of the battery cells 111 is a basic unit of a lithium ion battery, i.e., a secondary battery. Each of the battery cells 111 may include an electrode assembly, an electrolyte, and a cell case. The electrode assembly provided in the cell case may include a positive electrode, a negative electrode, and a separator interposed between the positive electrode and the negative electrode. The electrode assembly may be a jelly-roll type electrode assembly or a stack type electrode assembly according to a form of assembly. The jelly roll type electrode assembly may include a structure in which a positive electrode, a negative electrode, and a separator interposed therebetween are wound together. The stack type electrode assembly may include a plurality of positive electrodes, a plurality of negative electrodes, and a plurality of separators interposed therebetween that are stacked sequentially. The positive electrodes may each include a positive electrode current collector and a positive electrode active material. The negative electrodes may each include a negative electrode current collector and a negative electrode active material.

The plurality of battery cells 111 may be connected in series and/or in parallel. For example, the plurality of battery cells 111 may be connected to each other in series. For example, the plurality of battery cells 111 may be connected to each other in parallel. For example, when a set of two or more battery cells 111 connected in parallel is defined as a bank, one bank including two or more battery cells 111 connected in parallel and another bank including two or more battery cells 111 connected in parallel may be connected in series.

Each of the battery cells 111 may be a pouch type battery cell, a cylindrical battery cell, or a prismatic battery cell. An electrode assembly of the pouch type battery cell is embedded in a pouch case including an aluminum laminate sheet. An electrode assembly of the cylindrical battery cell is embedded in a cylindrical metal can. An electrode assembly of the prismatic battery cell is embedded in a prismatic metal can.

In example embodiments, the plurality of battery cells 111 may be pouch type battery cells and be stacked in one battery cell assembly 100 in a first direction (an X-axis direction). In example embodiments, in each battery cell assembly 100, the plurality of battery cells 111 may be pouch type battery cells whose length in the first direction (the X-axis direction) is less than a length thereof in a second direction (a Y-axis direction) and be stacked in the first direction (the X-axis direction).

When viewed from a plane, the cell block 110 may have a rectangular shape whose length in the first direction (the X-axis direction) is less than a length thereof in the second direction (the Y-axis direction). In this case, the cell block 110 may have two lateral sides (i.e., a first lateral side and a second lateral side) facing each other in the first direction (the X-axis direction), a front side and a rear side facing each other in the second direction (the Y-axis direction), and an upper side and a lower side facing each other in a vertical direction (a Z-axis direction).

A bus bar frame on which bus bars are mounted may be disposed on each of the front and rear sides of the cell block 110. A plurality of bus bars may be mounted on the bus bar frame on the front side of the cell block 110, and a plurality of bus bars may be mounted on the bus bar frame on the rear side of the cell block 110.

An end plate 170 may be disposed on each of the front and rear sides of the cell block 110. The end plate 170 on the front side of the cell block 110 may cover the bus bar frame on the front side of the cell block 110, and the end plate 170 on the rear side of the cell block 110 may cover the bus bar frame on the rear side of the cell block 110.

A bus bar may be coupled to electrode leads of the battery cell 111. For example, the bus bar may be coupled to the electrode leads of the battery cell 111 by welding. For example, each bus bar may be an inter-bus bar coupled to electrode leads coupled to different battery cells 111 belonging to the cell block 110 to electrically connect the different battery cells 111. For example, each bus bar may be a terminal bus bar for electrically coupling the battery cell assembly 100 to another battery cell assembly 100 or another electrical device.

In example embodiments, the battery cell assembly 100 may include a single cell block 110. In example embodiments, the battery cell assembly 100 may include a cell block array with a plurality of cell blocks 110 arranged in the second direction (the Y-axis direction). For example, the battery cell assembly 100 may include two cell blocks 110 arranged in the second direction (the Y-axis direction). For example, the battery cell assembly 100 may include a first cell block and a second cell block that are arranged in the case CA to be spaced apart from each other in the second direction (the Y-axis direction) and electrically connected to each other.

An upper cover plate 120 may at least partially cover the upper side of the cell block 110. The upper cover plate 120 may be coupled to upper ends of two side cover plates 130 on both sides of the cell block 110. For example, one lateral part of the upper cover plate 120 may be coupled to the upper end of one of the side cover plates 130 by welding, and another lateral part thereof may be coupled to the upper end of the other side cover plate 130 by welding.

The upper cover plate 120 faces the upper side of the cell block 110. The upper cover plate 120 may be attached to the upper side of the cell block 110 and be thermally coupled to the cell block 110. For example, the upper cover plate 120 may be attached to the upper side of the cell block 110 through a thermally conductive adhesive layer interposed between the upper cover plate 120 and the upper side of the cell block 110. For example, the thermally conductive adhesive layer may include a thermal interface material (TIM).

The upper cover plate 120 includes a first cooling channel 123 configured to allow a first fluid to flow therethrough and be configured to cool the cell block 110. The first cooling channel 123 defines a passage for the first fluid. The first cooling channel 123 may have a single path extending from an inlet thereof to an outlet thereof. While the first fluid flows along the first cooling channel 123, the battery cell assembly 100 may be cooled. For example, the upper cover plate 120 may be manufactured by bonding two plates, and the first cooling channel 123 may include a space defined between the two plates. That is, the cooling channel 123 may be located inside of the upper cover plate 120. The first fluid may include coolant or a refrigerant. The first fluid can thus be a cooling fluid.

The upper cover plate 120 includes a first upper port 1231 to which a first pipe 150 is connected. The upper cover plate 120 may include a second upper port 1233 to which a second pipe 160 is connected. One of the first upper port 1231 and the second upper port 1233 of the upper cover plate 120 may include the inlet of the first cooling channel 123 into which the first fluid is introduced, and the other may include the outlet of the first cooling channel 123 from which the first fluid is discharged. As illustrated in Fig. 4, both the first upper port 1231 and the second upper port 1233 of the upper cover plate 120 are located at the same side of the upper cover plate 120. That is, the inlet and the outlet of the first fluid are located at the same side of the upper cover plate 120. Alternatively, in some embodiments, the first upper port 1231 and the second upper port 1233 of the upper cover plate 120 may be located at different sides of the upper cover plate 120, such as at the opposite sides of the upper cover plate 120 in the longitudinal direction of the upper cover plate 120 (that is opposite side in the direction of the y-axis). That is, the inlet and the outlet of the first fluid may be located at different sides of the upper cover plate 120, such as at opposite sides of the upper cover plate 120.

**In** example embodiments, the first upper port 1231 of the upper cover plate 120 may include the inlet of the first cooling channel 123, and the second upper port 1233 thereof may include the outlet of the first cooling channel 123. The first fluid provided from an external fluid supply CS may be transferred to an inlet 159 of the first pipe 150 through a flow path of a first transfer pipe 301, and may flow along a flow path 157 of the first pipe 150, the first upper port 1231 of the upper cover plate 120, the first cooling channel 123, the second upper port 1233 of the upper cover plate 120, and a flow path 167 of the second pipe 160. Thereafter, the first fluid may be discharged to a second transfer pipe 302 through an outlet 169 of the second pipe 160 and recovered to the external fluid supply CS through the second transfer pipe 302.

The upper cover plate 120 includes a protruding part 120p protruding from the cell block 110 to one side. For example, the protruding part 120p of the upper cover plate 120 may protrude from the front side of the cell block 110 in the second direction (the Y-axis direction). Both the first upper port 1231 and the second upper port 1233 of the upper cover plate 120 may be provided on the protruding part 120p of the upper cover plate 120. Both the first upper port 1231 and the second upper port 1233 of the upper cover plate 120 may be provided on a lower side of the protruding part 120p of the upper cover plate 120.

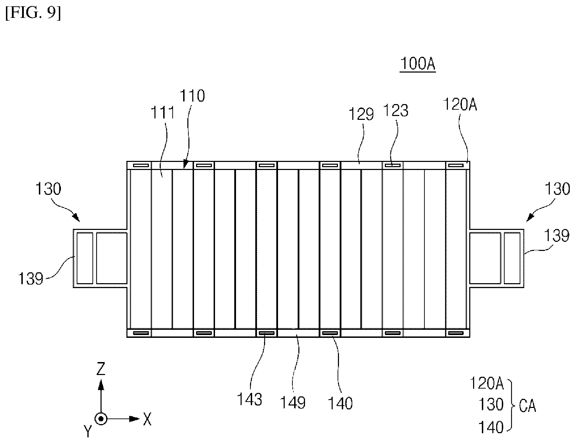

One of the two side cover plates 130 may cover the first lateral side of the cell block 110, and the other may cover the second lateral side of the cell block 110. The battery cell assembly 100 may be fastened to an external pack housing 501 (see FIG. 9) in a side mounting manner. For example, each of the side cover plates 130 may include one or more fastening flanges 139 protruding in the first direction (the X-axis direction). The fastening flange 139 may be provided with a fastening hole through which a fastening member such as a bolt passes. The fastening flange 139 may be fastened and supported on a support structure of the pack housing 501 by a fastening member such as a bolt.

The lower cover plate 140 is disposed to face the lower side of the cell block 110. The lower cover plate 140 may at least partially cover the lower side of the cell block 110. The lower cover plate 140 may be coupled to lower ends of the two side cover plates 130 on both sides of the cell block 110. For example, one lateral part of the lower cover plate 140 may be coupled to the lower end of one of the side cover plates 130 by welding, and another lateral part thereof may be coupled to the lower end of the other side cover plate 130 by welding. The lower cover plate 140, the upper cover plate 120, and optionally the side cover plates 130 may form a case CA surrounding four surfaces (e.g., the upper side, the lower side, the first lateral side, and the second lateral side) of the cell block 110.

The lower cover plate 140 may be attached to the lower side of the cell block 110 and be thermally coupled to the cell block 110. For example, the lower cover plate 140 may be attached to the lower side of the cell block 110 through a thermally conductive adhesive layer interposed between the lower cover plate 140 and the lower side of the cell block 110. For example, the thermally conductive adhesive layer may include the TIM.

The lower cover plate 140 includes a second cooling channel 143 configured to allow a second fluid to flow therethrough and be configured to cool the cell block 110. The second cooling channel 143 defines a passage for the second fluid. For example, as illustrated in Fig. 5B the second cooling channel 143 may be located inside of the cover plate 140. The second cooling channel 143 may have a single path extending from an inlet thereof to an outlet thereof. While the second fluid flows along the second cooling channel 143, the battery cell assembly 100 may be cooled. The second fluid may include coolant or a refrigerant. The second fluid can thus be a cooling fluid. The second fluid may be the same as or different from the first fluid.

The lower cover plate 140 may include a first lower port 1431 and a second lower port 1433. One of the first lower port 1431 and the second lower port 1433 of the lower cover plate 140 may include the inlet of the second cooling channel 143 into which the second fluid is introduced, and the other may include the outlet of the second cooling channel 143 from which the second fluid is discharged. In example embodiments, the first lower port 1431 of the lower cover plate 140 may include the inlet of the second cooling channel 143, and the second lower port 1433 thereof may include the outlet of the second cooling channel 143. The second fluid provided from the external fluid supply CS may be transferred to the first lower port 1431 of the lower cover plate 140 through a flow path of a third transfer pipe 303, and may flow from the first lower port 1431 to the second lower port 1433 along the second cooling channel 143. The second fluid discharged from the lower cover plate 140 may be recovered to the external fluid supply CS through a fourth transfer pipe 304.

The lower cover plate 140 may include a protruding part 140p protruding from the cell block 110 to one side. For example, the protruding part 140p of the lower cover plate 140 may protrude from the front side of the cell block 110 in the second direction (the Y-axis direction). Both the first lower port 1431 and the second lower port 1433 of the lower cover plate 140 may be provided on the protruding part 140p of the lower cover plate 140. Both the first lower port 1431 and the second lower port 1433 of the lower cover plate 140 may be provided on an upper side of the protruding part 140p of the lower cover plate 140.

The lower cover plate 140 is provided with a venting hole 149 for exhausting a high-temperature gas caused by the cell block 110 to a space under the cell block 110. The lower cover plate 140 may include a plurality of venting holes 149 arranged in the first direction (the X-axis direction) and the second direction (the Y-axis direction). A part of the lower side of the cell block 110 is thus exposed to the outside of the battery cell assembly 100 through the at least one venting hole 149 of the lower cover plate 140. As can be seen from Fig. 5B the venting holes 149 are preferably arranged such that the cooling channel 143 is located between the venting holes 149.

According to example embodiments of the present invention, the battery cell assembly 100 has a multi-faceted cooling structure for simultaneously cooling multiple surfaces of the battery cell assembly 100, thereby reducing heat deviation and temperature deviation between the battery cells 111. Accordingly, temperatures of the battery cells 111 and the battery cell assembly 100 may be more uniformly controlled, thereby improving the safety and reliability of the battery cell assembly 100 and the battery pack including the battery cell assembly 100.

According to example embodiments of the present invention, a venting hole is provided in the case CA of the battery cell assembly 100 to discharge a high-temperature gas or flames, thereby ensuring safety in a thermal runaway event.

According to example embodiments of the present invention, a cooling plate (e.g., the lower cover plate 140) of the case CA of the battery cell assembly 100 is provided with a function of cooling the battery cells 111 and a function of discharging a high-temperature gas through the venting hole and thus a thermal propagation may be effectively delayed and suppressed. Therefore, the safety and reliability of the battery cell assembly and a battery pack including the same can improve.

According to example embodiments of the present invention, the battery cell assembly 100 has the multi-faceted cooling structure and a venting function and thus an increase of temperature of the battery cells 111 can be alleviated during quick charging. Accordingly, a derating issue caused by an increase of temperature of the battery cells 111 can be reduced or prevented, and a customer demand for shortening a quick charging time can be satisfied.

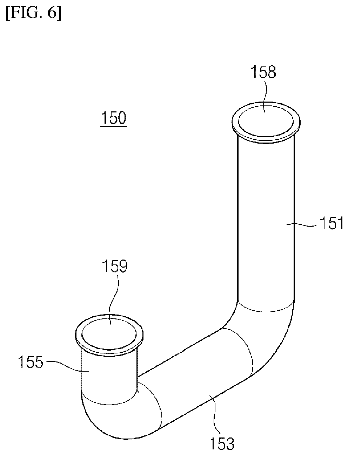

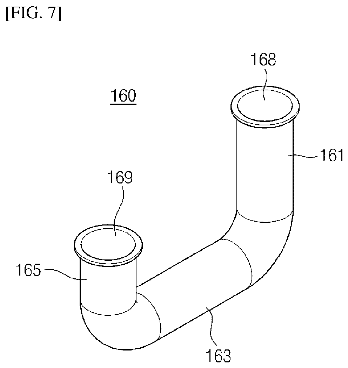

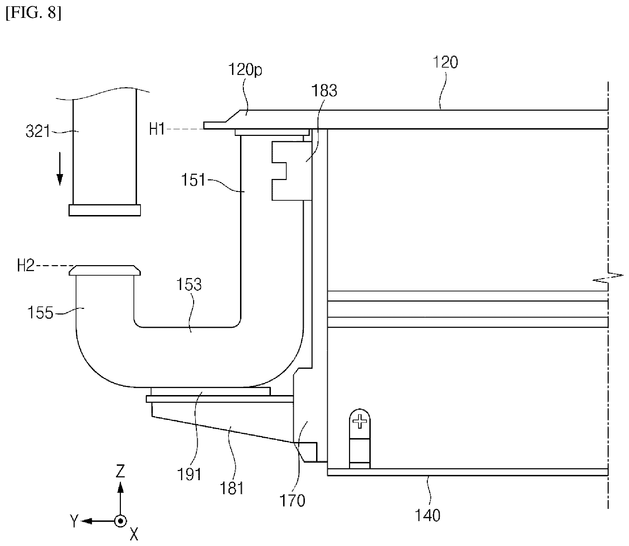

FIG. 6 is a perspective view of the first pipe 150 of the battery cell assembly 100 of FIG. 1. FIG. 7 is a perspective view of the second pipe 160 of the battery cell assembly 100 of FIG. 1. FIG. 8 is a side view schematically illustrating a part of the battery cell assembly 100 of FIG. 1.

Referring to FIGS. 6 to 8 together with FIGS. 1 to 5B, the first pipe 150 is connected to the first upper port 1231 of the upper cover plate 120. The second pipe 160 may be connected to the second upper port 1233 of the upper cover plate 120. In example embodiments, the first pipe 150 may be coupled to the first upper port 1231 of the upper cover plate 120 by welding, and the second pipe 160 may be coupled to the second upper port 1233 of the upper cover plate 120 by welding. The first pipe 150 may be a supply pipe configured to supply the first fluid provided from the outside to the first cooling channel 123 of the upper cover plate 120, and the second pipe 160 may be a discharge pipe configured to discharge the first fluid discharged from the first cooling channel 123 of the upper cover plate 120 to the outside.

The first pipe 150 may be supplied with the first fluid from the external fluid supply unit CS through the first transfer pipe 301, and transfer the first fluid to the first upper port 1231 of the upper cover plate 120. The first pipe 150 may provide a single flow path 157 extending from one end thereof connected to the first transfer pipe 301 to another end thereof connected to the first upper port 1231 of the upper cover plate 120.

When viewed from a side view, the first pipe 150 has a roughly U-shape. More specifically, the first pipe 150 includes a first part 151 extending downward from the first upper port 1231 of the upper cover plate 120, a second part 153 extending from the first part 151 in a direction crossing a direction in which the first part 151 extends, and a third part 155 extending upward from the second part 153. An outlet 158 connected to the first upper port 1231 of the upper cover plate 120 may be provided at an upper end of the first part 151 of the first pipe 150, and an inlet 159 through which the first fluid supplied from the outside is introduced may be provided at an upper end of the third part 155 of the first pipe 150. The upper end of the third part 155 of the first pipe 150 may be an end of the first pipe 150. The first pipe 150 may be attached to a lower side of the upper cover plate 120, and an entire part thereof may be below the upper cover plate 120.

The second pipe 160 may discharge the first fluid discharged from the upper cover plate 120 to the second transfer pipe 302, and the first fluid may be transferred to the external fluid supply CS through the second transfer pipe 302. The second pipe 160 may provide a single flow path 167 extending from one end thereof connected to the second transfer pipe 302 to another end thereof connected to the second upper port 1233 of the upper cover plate 120.

When viewed from a side view, the second pipe 160 may have a roughly U-shape. More specifically, the second pipe 160 may include a fourth part 161 extending downward from the second upper port 1233 of the upper cover plate 120, a fifth part 163 extending from the fourth part 161 in a direction crossing a direction in which the fourth part 161 extends, and a sixth part 165 extending upward from the sixth part 163. An inlet 168 connected to the second upper port 1233 of the upper cover plate 120 may be provided at an upper end of the fourth part 161 of the second pipe 160, and an outlet 169 for discharging the first fluid may be provided at an upper end of the sixth part 165 of the second pipe 160. The upper end of the sixth part 165 of the second pipe 160 may be an end of the second pipe 160. The second pipe 160 may be attached to the lower side of the upper cover plate 120, and an entire part thereof may be below the upper cover plate 120.

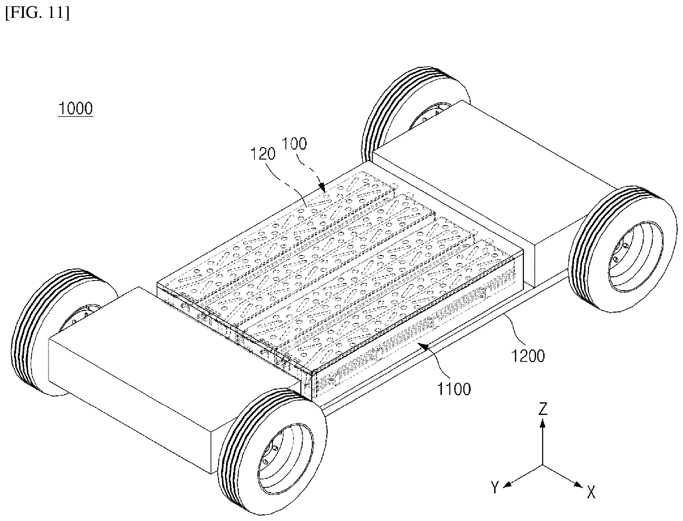

A technical advantage of the roughly U-shape of the first pipe 150 and/or of the second pipe 160 is that it ensures easier installation of the battery cell assembly 100 into its final location, such as into an electric vehicle of Fig. 11. For example, when the battery cell assembly 100 is mounted in the vehicle 1000 of Fig. 11, it can be seen that the connection between the pipe supplying the first fluid and the first pipe 150 and the connection between the pipe discharging the first fluid and the second pipe 160 is established from the area above the battery cell assembly 100. That is, since the area below the battery cell assembly 100 is blocked by the body frame 1200, it cannot generally be reached by the technician who is assembling the vehicle. The technician thus establishes the connection between the pipes by reaching down from the area above the battery cell assembly 100. The U-shape of the first pipe 150 and/or of the second pipe 160 ensures that the inlet 159 and the outlet 169 both face toward the upper direction along the vertical axis. The U-shape thus facilitates easier manufacturing process of the vehicle carrying the battery cell assembly 100.

The battery cell assembly 100 may include a first bottom support 181 for supporting the first pipe 150 and a second bottom support 185 for supporting the second pipe 160. The first bottom support 181 and the second bottom support 185 may be provided to the end plate 170 on the front side of the cell block 110. In example embodiments, each of the first bottom support 181 and the second bottom support 185 may be a part of the end plate 170. The first bottom support 181 may be disposed below the second part 153 of the first pipe 150 and support a lower portion of the second part 153 of the first pipe 150. The second bottom support 185 may be disposed below the fifth part 163 of the second pipe 160 and support a lower portion of the fifth part 163 of the second pipe 160.

In example embodiments, a first elastic pad 191 may be provided between the first bottom support 181 and the second part 153 of the first pipe 150. In example embodiments, a second elastic pad 193 may be provided between the second bottom support 185 and the fifth part 163 of the second pipe 160.

The battery cell assembly 100 may include a first side support 183 for supporting a lateral side of the first pipe 150 and a second side support (not shown) for supporting a lateral side of the second pipe 160. Each of the first side support 183 and the second side support may be a part of the end plate 170. The first side support 183 may support and be in contact with a lateral portion of the first part 151 of the first pipe 150. The first part 151 of the first pipe 150 may be inserted into a groove provided in the first side support 183. The second side support may support and be in contact with a lateral portion of the fourth part 161 of the second pipe 160. The fourth part 161 of the second pipe 160 may be inserted into a groove provided in the second side support.

A position H2 of an upper end of the third part 155 of the first pipe 150 in the vertical direction (the Z-axis direction) may be lower than a position H1 of the lower side of the upper cover plate 120 in the vertical direction (the Z-axis direction). Similarly, a position of the sixth part 165 of the second pipe 160 in the vertical direction (the Z-axis direction) may be lower than the position H1 of the lower side of the upper cover plate 120 in the vertical direction (the Z-axis direction). When pipes for transferring the first fluid are attached to the upper side of the upper cover plate 120, a total thickness of the battery cell assembly 100 may increase and a space occupied by each battery cell assembly 100 may increase, thus resulting in a reduction of the energy density of a battery pack. However, according to embodiments, the entire first and second pipes 150 and 160 are lower than the upper cover plate 120 and thus the battery cell assembly 100 with a cooling function can be provided without causing an energy density reduction issue.

In addition, in embodiments, the first pipe 150 is attached to the lower side of the upper cover plate 120, and the first bottom support 181 may support the lower portion of the first pipe 150. When a valve 321 is mounted on an end of the first pipe 150, an external force applied to the end of the first pipe 150 causes the first pipe 150 to pivot about a joint between the first pipe 150 and the upper cover plate 120. The joint (e.g., a welded area) between the first pipe 150 and the upper cover plate 120 may be broken or damaged due to the pivot of the first pipe 150.

However, according to embodiments of the present invention, the first bottom support 181 may support the lower portion of the first pipe 150 to prevent the first pipe 150 from pivoting by an external force applied when the valve 321 is mounted on the end of the first pipe 150. Similarly, the second bottom support 185 may support the lower portion of the second pipe 160 to prevent the second pipe 160 from pivoting by an external force applied when a valve is mounted on an end of the second pipe 160. According to embodiments, the joint reliability between pipes (i.e., the first pipe 150 and the second pipe 160) for supplying and discharging the first fluid and a cooling plate (i.e., the upper cover plate 120) can be improved. Therefore, the reliability of the cooling performance of the battery cell assembly 100 may be improved, and the safety and reliability of the battery cell assembly 100 may be improved.

### (Second Embodiment)

FIG. 9 is a cross-sectional view of a battery cell assembly 100A according to example embodiments of the present invention. Hereinafter, the battery cell assembly 100A of FIG. 9 will be described focusing on differences from the battery cell assembly 100 described above with reference to FIGS. 1 to 5B.

Referring to FIG. 9, an upper cover plate 120A may be provided with a venting hole 129 for exhausting a high-temperature gas generated from a cell block 110 to an external space of the cell block 110. The upper cover plate 120A may include a plurality of venting holes 129 arranged in the first direction (the X-axis direction) and the second direction (the Y-axis direction). A part of an upper side of the cell block 110 may be exposed to the outside of the battery cell assembly 100A through the plurality of venting holes 129 of the upper cover plate 120A.

### (Third Embodiment)

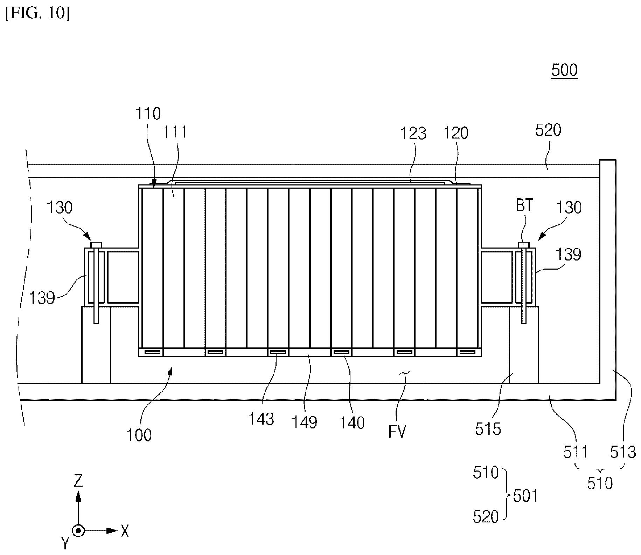

FIG. 10 is a cross-sectional view of a battery pack 500 according to example embodiments of the present invention.

Referring to FIG. 10, the battery pack 500 may include a pack housing 501 and a battery cell assembly 100 mounted in the pack housing 501. The battery pack 500 may include one or more battery cell assemblies 100 mounted in the pack housing 501. In example embodiments, the battery pack 500 may include two or more battery cell assemblies 100 arranged in the first direction (the X-axis direction).

The pack housing 501 may include a lower housing 510 with an accommodation space in which the battery cell assembly 100 is accommodated, and a pack lid 520 coupled on the lower housing 510 to cover the lower housing 510 in which the battery cell assembly 100 is accommodated. The accommodation space of the lower housing 510 may be defined by a bottom wall 511 facing a lower side of the cell block 110 of each battery cell assembly 100 and side walls 513 extending along the perimeter of the bottom wall 511.

When the battery pack 500 is mounted in a vehicle, a cabin room in which a passenger rides may be located above the pack lid 520, and a ground on which the vehicle travels may be located below the lower housing 510.

The battery cell assembly 100 may be mounted in the pack housing 501 in the side mounting manner. More specifically, a fastening flange 139 of each side cover plate may be fastened and supported on a corresponding support structure 515 among support structures 515 provided on the lower housing 510 through a bolt BT.

A free volume FV may be provided between the bottom wall 511 of the lower housing 510 and the battery cell assembly 100. The free volume FV may be understood as an empty space between each of a plurality of battery cell assemblies 100 and the lower housing 510. The free volume FV may be referred to as a space, a buffer space, or a venting space. A lower cover plate 140 of each battery cell assembly 100 and the bottom wall 511 of the lower housing 510 may be spaced apart from each other with the free volume FV therebetween. The lower side of the cell block 110 may be exposed toward the free volume FV through a venting hole 149 of the lower cover plate 140. A gas and flames generated in a thermal runaway situation may move through the free volume FV. That is, the free volume FV functions as a venting passage through which a high-temperature gas and flames move.

Even when a strong impact is generated due to a foreign material splashing to a lower part of a vehicle in a hard ground driving situation such as a non-paved road, the impact can be absorbed through the free volume FV. Therefore, a plurality of battery cell assemblies 100 can be prevented from being damaged due to the impact. The free volume FV may be available as a space for freely allowing deformation of the lower housing 510 to some extent when the lower housing 510 deforms toward the battery cell assembly 100 due to an impact applied to the lower part of the vehicle.

A height of the free volume FV and the distance between the bottom wall of the lower housing 510 and the battery cell assembly 100 may be determined enough to absorb external impact. The height of the free volume FV may be determined in consideration of dimensions and rigidity of the frames of the vehicle, dimensions and rigidity of the lower housing 510, dimensions of the battery pack 500, the amount of a generated gas and a gas discharge speed during thermal runaway, and the like. For example, when the thickness or rigidity of the frames of the vehicle or the bottom wall of the lower housing 510 is relatively large, at least one of the size and height of the free volume FV may be relatively reduced. When the thickness or rigidity of the frames of the vehicle or the bottom wall of the lower housing 510 is relatively small, the bottom wall of the lower housing 510 is highly likely to deform and thus at least one of the size and height of the free volume FV may be relatively increased to protect the battery cell assembly 100. When the size of the battery pack 500 is relatively large compared to the standards of the battery pack 500, a relatively large free volume FV can be secured. When the size of the battery pack 500 is relatively small, a height of the free volume FV to be secured may be relatively small and thus the thickness and rigidity of the bottom wall of the lower housing 510 may have to be relatively increased. When the height of the free volume FV is extremely small, a gas discharge passage may be small and thus internal pressure of the battery pack 500 may increase sharply during thermal runaway. Accordingly, the size and height of the free volume FV may be determined in consideration of the amount of a generated gas and the gas discharge speed.

A maximum height of the free volume FV may be determined according to a degree of damage to the battery cells 111 included in the battery cell assembly 100. For example, when a damage tolerance limit of the battery cell 111 is 1 mm, the free volume FV may be determined to prevent the battery cell 111 from deforming by more than 1 mm when the lower housing 510 deforms and pressurizes a lower side of the battery cell 111. In this case, the amount of deformation of the lower housing 510 may vary according to the thickness or rigidity of the lower housing 510. Therefore, the size or height of the free volume FV may be determined in consideration of all the damage tolerance limit of the battery cell 111 and the thickness and rigidity of the lower housing 510.

In example embodiments, an upper side of the battery cell assembly 100 may be in close contact with a lower side of the pack lid 520. When there is a space between the battery cell assembly 100 and the pack lid 520, a high-temperature gas may be introduced into the space between the battery cell assembly 100 and the pack lid 520 during thermal runaway and thus heat and flames may propagate to another adjacent battery cell assembly 100. The heat and the flames are also transferred to the pack lid 520 and thus may affect the cabin room above the pack lid 520. Therefore, a gas or flames generated in the battery pack 500 may be guided to the free volume FV by bringing the upper side of the battery cell assembly 100 and the lower side of the pack lid 520 into close contact with each other.

### (Fourth Embodiment)

FIG. 11 is a schematic view of an electric vehicle 1000 in which a battery pack 1100 according to example embodiments of the present invention is mounted.

For the sake of simplicity, FIG. 11 illustrates only a vehicle body frame 1200 forming a lower frame of a vehicle, and a battery pack 1100 and tires that are coupled to the vehicle body frame 1200. For example, the battery pack 1100 may include the battery pack 500 described above with reference to FIG. 10.

In the case of a general battery pack, battery cell assemblies are installed at the bottom of a pack housing of the battery pack. In embodiments, the free volume FV (see FIG. 10) may be provided under the battery cell assemblies 100 of the battery pack 1100. By bringing the battery cell assembly 100 and the pack lid 520 into close contact with each other, a gas generated from the battery cell assembly 100 may be guided to the free volume FV rather than the cabin room of the vehicle. The gas may be guided to the free volume FV provided in the battery cell assembly 100 and a pack housing of the battery pack 1100. The gas may flow through the free volume FV and be discharged to the lower or lateral side of the vehicle through a gas exhaust installed in the battery pack 1100. In addition, according to the present embodiments, in the battery pack 1100, the free volume FV is provided between the battery cell assembly 100 and the pack housing and thus the battery cell assembly 100 can be prevented from being damaged regardless of the deformation of the pack housing.

According to embodiments of the present invention, the safety of passengers can be strengthened owing to the battery pack 1100 and the electric vehicle 1000 including the same. In addition, the battery cell assembly 100 that is a key component can be protected and the durability of the battery pack 1100 and the electric vehicle 1000 can be enhanced.

According to example embodiments of the present invention, a battery cell assembly has a multi-faceted cooling structure for simultaneously cooling multiple surfaces of the battery cell assembly, thereby reducing heat deviation and temperature deviation between battery cells. Ultimately, temperatures of the battery cells and the battery cell assembly can be more uniformly controlled to improve the safety and reliability of the battery cell assembly and the battery pack including the same.

According to example embodiments of the present invention, a venting hole is provided in a case of the battery cell assembly to discharge a high-temperature gas or flames, thereby ensuring safety in a thermal runaway event.

According to example embodiments of the present invention, a cooling plate included in a case of a battery cell assembly has a function of cooling battery cells and a function of exhausting a high-temperature gas through a venting hole and thus thermal propagation can be effectively delayed and suppressed. Therefore, the safety and reliability of the battery cell assembly and a battery pack including the same can improve.

According to example embodiments of the present invention, a battery cell assembly has the multi-faceted cooling structure and a venting function and thus an increase of temperature of battery cells can be alleviated during quick charging. Accordingly, a derating issue caused by an increase of temperature of the battery cells can be reduced or prevented, and a customer demand for shortening a quick charging time can be satisfied.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

The present invention has been described above in more detail with reference to the drawings, the embodiments, etc. However, the configurations illustrated in the drawings or embodiments described in the present specification are only exemplary embodiments, while the actual invention is defined in the appended claims.

## Claims

1. A battery cell assembly (100) comprising:
a cell block (110) including a plurality of battery cells (111); and
a case (CA) accommodating the cell block (110),
wherein the case (CA) comprises:
an upper cover plate (120) facing an upper side of the cell block (110) and including a first cooling channel (123) configured such that a first fluid flows therethrough; and
a lower cover plate (140) facing a lower side of the cell block (110), and including a venting hole (149) and a second cooling channel configured such that (143) a second fluid flows therethrough,
**characterized in that**
the upper cover plate (120) further comprises a protruding part (120p) protruding from a side of the cell block (110), and
the battery cell assembly (100) further comprises a first pipe (150) connected to a first upper port (1231) on a lower side of the protruding part (120p) and configured to transfer the first fluid,
wherein the first pipe (150) comprises:
a first part (151) extending downward from the first upper port (1231) of the upper cover plate (120);
a second part (153) extending from the first part (151) in a direction crossing a direction in which the first part (151) extends; and
a third part (155) extending upward from the second part (153).

2. The battery cell assembly (100) of claim 1, wherein a part of the lower side of the cell block (110) is exposed to the outside through the venting hole (149) of the lower cover plate (140).

3. The battery cell assembly (100) of claim 1 or 2, wherein the upper cover plate (120) further comprises a venting hole (129).

4. The battery cell assembly (100) of claim 3, wherein a part of the upper side of the cell block (110) is exposed to the outside through the venting hole (129) of the upper cover plate (120).

5. The battery cell assembly (100) of any one of claims 1-4, further comprising a first bottom support (181) provided below the second part (153) of the first pipe (150) and supporting the second part (153) of the first pipe (150).

6. The battery cell assembly (100) of claim 5, further comprising a first elastic pad (191) provided between the second part (153) of the first pipe (150) and the first bottom support (181).

7. The battery cell assembly (100) of any one of claims 1-6, wherein an upper end of the third part (155) of the first pipe (150) is an end of the first pipe (150) and is located below the first upper port (1231) of the upper cover plate (120).

8. The battery cell assembly (100) of any one of claims 1-7, further comprising a second pipe (160) connected to a second upper port (1233) on the lower side of the protruding part (120p) of the upper cover plate (120), and configured to transfer the first fluid, and
wherein one of the first pipe (150) and the second pipe (160) is configured to transfer the first fluid supplied from the outside to the first cooling channel (123) of the upper cover plate (120), and the other first or second pipe (150, 160) is configured to transfer the first fluid discharged from the first cooling channel (123) of the upper cover plate (120) to the outside,
the second pipe (160) comprises:
a fourth part (161) extending downward from the second upper port (1233) of the upper cover plate (120);
a fifth part (163) extending from the fourth part (161) in a direction crossing a direction in which the fourth part (161) extends; and
a sixth part (165) extending upward from the fifth part (163),
an upper end of the sixth part (165) of the second pipe (160) is an end of the second pipe (160), and is located below the second upper port (1233) of the upper cover plate (120).

9. The battery cell assembly (100) of claim 8, further comprising:
a second bottom support (185) provided below the fifth part (163) of the second pipe (160) and supporting the fifth part (163) of the second pipe (160); and
a second elastic pad (193) provided between the fifth part (163) of the second pipe (160) and the second bottom support (185).

10. The battery cell assembly (100) of any one of claims 1-9, wherein the lower cover plate (140) further comprises a protruding part (140p) protruding from a side of the cell block (110), and
an upper end of the protruding part (140p) of the lower cover plate (140) is provided with a first lower port (1431) into which the second fluid is introduced and a second lower port (1433) from which the second fluid is discharged.

11. The battery cell assembly (100) of any one of claims 1-10, wherein the case (CA) further comprises a side cover plate (130) facing a lateral side of the cell block (110),
wherein the side cover plate (130) is coupled to the upper cover plate (120) and the lower cover plate (140) and comprises a fastening flange (139) configured to be fastened to an external support structure.

12. A battery pack (500) comprising:
a pack housing (501); and
a battery cell assembly (100) accommodated in the pack housing (501), and including a cell block (110) with a plurality of battery cells (111) and a case (CA) accommodating the cell block (110),
wherein the case (CA) comprises:
an upper cover plate (120) facing an upper side of the cell block (110) and including a first cooling channel (123) configured such that a first fluid flows therethrough; and
a lower cover plate (140) facing a lower side of the cell block (110), and including a venting hole (149) and a second cooling channel (143) configured such that a second fluid flows therethrough,
**characterized in that**
the upper cover plate (120) further comprises a protruding part (120p) protruding from a side of the cell block (110), and
the battery cell assembly (100) further comprises a first pipe (150) connected to a first upper port (1231) on a lower side of the protruding part (120p) and configured to transfer the first fluid,
wherein the first pipe (150) comprises:
a first part (151) extending downward from the first upper port (1231) of the upper cover plate (120);
a second part (153) extending from the first part (151) in a direction crossing a direction in which the first part (151) extends; and
a third part (155) extending upward from the second part (153).

13. The battery pack (500) of claim 12, wherein the case (CA) further comprises a side cover plate (130) facing a lateral side of the cell block (110),
wherein the side cover plate (130) comprises a fastening flange (139) configured to be fastened to a support structure on a bottom wall of the pack housing (501),
the lower cover plate (140) of the battery cell assembly (100) is spaced apart from the bottom wall of the pack housing (501) with a first space interposed therebetween, and
the lower side of the cell block (110) is exposed toward the first space through the venting hole (149).

14. The battery pack (500) of claim 12 or 13, wherein
the battery cell assembly (100) further comprises:
a second pipe (160) connected to a second upper port (1233) on the lower side of the protruding part (120p) of the upper cover plate (120) and configured to transfer the first fluid discharged from the first cooling channel (123) to the outside.

## Patentansprüche

1. Batteriezellenanordnung (100), umfassend:
einen Zellenblock (110) einschließlich einer Vielzahl von Batteriezellen (111); und
ein Gehäuse (CA), das den Zellenblock (110) aufnimmt,
wobei das Gehäuse (CA) umfasst:
eine obere Abdeckplatte (120), die einer oberen Seite des Zellenblocks (110) zugewandt ist und einen ersten Kühlkanal (123) einschließt, der so konfiguriert ist, dass ein erstes Fluid durch ihn hindurchfließt; und
eine untere Abdeckplatte (140), die einer unteren Seite des Zellenblocks (110) zugewandt ist, und ein Entlüftungsloch (149) und einen zweiten Kühlkanal einschließt, der so konfiguriert ist, dass (143) ein zweites Fluid durch ihn hindurchfließt,
**dadurch gekennzeichnet, dass**
die obere Abdeckplatte (120) ferner ein vorstehendes Teil (120p) umfasst, das von einer Seite des Zellenblocks (110) vorsteht, und
die Batteriezellenanordnung (100) ferner ein erstes Rohr (150) umfasst, das mit einem ersten oberen Anschluss (1231) mit einer unteren Seite des vorstehenden Teils (120p) verbunden ist und so konfiguriert ist, dass es das erste Fluid transferiert,
wobei das erste Rohr (150) umfasst:
einen ersten Teil (151), der sich von dem ersten oberen Anschluss (1231) der oberen Abdeckplatte (120) erstreckt;
einen zweiten Teil (153), der sich von dem ersten Teil (151) in einer Richtung erstreckt, die eine Richtung kreuzt, in der sich der erste Teil (151) erstreckt; und
einen dritten Teil (155), der sich von dem zweiten Teil (153) nach oben erstreckt.

2. Batteriezellenanordnung (100) nach Anspruch 1, wobei ein Teil der unteren Seite des Zellenblocks (110) durch das Entlüftungsloch (149) der unteren Abdeckplatte (140) nach außen freigelegt ist.

3. Batteriezellenanordnung (100) nach Anspruch 1 oder 2, wobei die obere Abdeckplatte (120) ferner ein Entlüftungsloch (129) umfasst.

4. Batteriezellenanordnung (100) nach Anspruch 3, wobei ein Teil der oberen Seite des Zellenblocks (110) durch das Entlüftungsloch (129) der oberen Abdeckplatte (120) nach außen freigelegt ist.

5. Batteriezellenanordnung (100) nach einem beliebigen der Ansprüche 1 - 4, ferner umfassend eine erste Bodenstütze (181), die unterhalb des zweiten Teils (153) des ersten Rohrs (150) bereitgestellt ist und den zweiten Teil (153) des ersten Rohrs (150) stützt.

6. Batteriezellenanordnung (100) nach Anspruch 5, ferner umfassend ein erstes elastisches Pad (191), das zwischen dem zweiten Teil (153) des ersten Rohrs (150) und der ersten Bodenstütze (181) bereitgestellt ist.

7. Batteriezellenanordnung (100) nach einem beliebigen der Ansprüche 1 - 6, wobei ein oberes Ende des dritten Teils (155) des ersten Rohrs (150) ein Ende des ersten Rohrs (150) ist und sich unterhalb des ersten oberen Anschlusses (1231) der oberen Abdeckplatte (120) befindet.

8. Batteriezellenanordnung (100) nach einem beliebigen der Ansprüche 1 - 7, ferner umfassend ein zweites Rohr (160), das mit einem zweiten oberen Anschluss (1233) an der unteren Seite des vorstehenden Teils (120p) der oberen Abdeckplatte (120) verbunden ist und so konfiguriert ist, dass es das erste Fluid transferiert, und
wobei eines von dem ersten Rohr (150) und dem zweiten Rohr (160) so konfiguriert ist, dass es das von außen zugeführte erste Fluid zu dem ersten Kühlkanal (123) der oberen Abdeckplatte (120) transferiert, und das andere erste oder zweite Rohr (150, 160) so konfiguriert ist, dass es das von dem ersten Kühlkanal (123) der oberen Abdeckplatte (120) abgegebene erste Fluid nach außen transferiert,
wobei das zweite Rohr (160) umfasst:
einen vierten Teil (161), der sich von dem zweiten oberen Anschluss (1233) der oberen Abdeckplatte (120) nach unten erstreckt;
einen fünften Teil (163), der sich von dem vierten Teil (161) in einer Richtung erstreckt, die eine Richtung kreuzt, in der sich der vierte Teil (161) erstreckt; und
einen sechsten Teil (165), der sich von dem fünften Teil (163) nach oben erstreckt,
ein oberes Ende des sechsten Teils (165) des zweiten Rohrs (160) ein Ende des zweiten Rohrs (160) ist und unterhalb des zweiten oberen Anschlusses (1233) der oberen Abdeckplatte (120) angeordnet ist.

9. Batteriezellenanordnung (100) nach Anspruch 8, ferner umfassend:
eine zweite Bodenstütze (185), die unter dem fünften Teil (163) des zweiten Rohrs (160) bereitgestellt ist und den fünften Teil (163) des zweiten Rohrs (160) stützt; und
ein zweites elastisches Pad (193), das zwischen dem fünften Teil (163) des zweiten Rohrs (160) und der zweiten Bodenstütze (185) bereitgestellt ist.

10. Batteriezellenanordnung (100) nach einem beliebigen der Ansprüche 1 - 9, wobei die untere Abdeckplatte (140) ferner ein vorstehendes Teil (140p) umfasst, das von einer Seite des Zellenblocks (110) vorsteht, und
ein oberes Ende des vorstehenden Teils (140p) der unteren Abdeckplatte (140) mit einem ersten unteren Anschluss (1431), in den das zweite Fluid eingeleitet wird, und eines zweiten unteren Anschlusses (1433), aus der das zweite Fluid abgeleitet wird, bereitgestellt ist.

11. Batteriezellenanordnung (100) nach einem beliebigen der Ansprüche 1 - 10, wobei das Gehäuse (CA) ferner eine seitliche Abdeckplatte (130) umfasst, die einer seitlichen Seite des Zellenblocks (110) zugewandt ist,
wobei die seitliche Abdeckplatte (130) mit der oberen Abdeckplatte (120) und der unteren Abdeckplatte (140) gekoppelt ist und einen Befestigungsflansch (139) aufweist, der so konfiguriert ist, dass er an einer externen Stützstruktur befestigt werden kann.

12. Batteriepack (500), umfassend:
ein Packgehäuse (501); und
eine Batteriezellenanordnung (100), die in dem Packgehäuse (501) untergebracht ist und einen Zellenblock (110) mit einer Vielzahl von Batteriezellen (111) und ein Gehäuse (CA), das den Zellenblock (110) aufnimmt, einschließt,
wobei das Gehäuse (CA) umfasst:
eine obere Abdeckplatte (120), die einer oberen Seite des Zellenblocks (110) zugewandt ist und einen ersten Kühlkanal (123) einschließt, der so konfiguriert ist, dass ein erstes Fluid durch ihn hindurchfließt; und
eine untere Abdeckplatte (140), die einer unteren Seite des Zellenblocks (110) zugewandt ist, und ein Entlüftungsloch (149) und einen zweiten Kühlkanal (143) einschließt, der so konfiguriert ist, dass ein zweites Fluid durch ihn hindurchfließt,
**dadurch gekennzeichnet, dass**
die obere Abdeckplatte (120) ferner ein vorstehendes Teil (120p) umfasst, das von einer Seite des Zellenblocks (110) vorsteht, und
die Batteriezellenanordnung (100) ferner ein erstes Rohr (150) umfasst, das mit einem ersten oberen Anschluss (1231) an einer unteren Seite des vorstehenden Teils (120p) verbunden ist und so konfiguriert ist, dass es das erste Fluid transferiert,
wobei das erste Rohr (150) umfasst:
einen ersten Teil (151), der sich von dem ersten oberen Anschluss (1231) der oberen Abdeckplatte (120) erstreckt;
einen zweiten Teil (153), der sich von dem ersten Teil (151) in einer Richtung erstreckt, die eine Richtung kreuzt, in der sich der erste Teil (151) erstreckt; und
einen dritten Teil (155), der sich von dem zweiten Teil (153) nach oben erstreckt.

13. Batteriepack (500) nach Anspruch 12, wobei das Gehäuse (CA) ferner eine seitliche Abdeckplatte (130) umfasst, die einer seitlichen Seite des Zellenblocks (110) zugewandt ist,
wobei die seitliche Abdeckplatte (130) einen Befestigungsflansch (139) aufweist, der so konfiguriert ist, dass er an einer Stützstruktur an einer Bodenwand des Packgehäuses befestigt sein kann (501),
die untere Abdeckplatte (140) der Batteriezellenanordnung (100) von der Bodenwand des Packgehäuses (501) beabstandet ist, wobei ein erster Zwischenraum dazwischen angeordnet ist, und
die untere Seite des Zellenblocks (110) durch das Entlüftungsloch (149) in Richtung des ersten Raums freigelegt ist.

14. Batteriepack (500) nach Anspruch 12 oder 13, wobei
die Batteriezellenanordnung (100) ferner umfasst:
ein zweites Rohr (160), das mit einem zweiten oberen Anschluss (1233) an der unteren Seite des vorstehenden Teils (120p) der oberen Abdeckplatte (120) verbunden ist und so konfiguriert ist, dass es das aus dem ersten Kühlkanal (123) abgegebene erste Fluid nach außen transferiert.

## Revendications

1. Ensemble élément de batterie (100), comprenant :
un bloc élément (110) incluant une pluralité d'éléments de batterie (111) ; et
un boîtier (CA) logeant le bloc élément (110),
dans lequel le boîtier (CA) comprend :
une plaque de recouvrement supérieure (120) faisant face à un côté supérieur du bloc élément (110) et incluant un premier canal de refroidissement (123) configuré de sorte qu'un premier fluide s'écoule à travers celui-ci ; et
une plaque de recouvrement inférieure (140) faisant face à un côté inférieur du bloc élément (110), et incluant un trou d'évent (149) et un second canal de refroidissement (143) configuré de sorte qu'un second fluide s'écoule à travers celui-ci,
**caractérisé en ce que**
la plaque de recouvrement supérieure (120) comprend en outre une partie saillante (120p) qui dépasse d'un côté du bloc élément (110), et
l'ensemble élément de batterie (100) comprend en outre un premier tuyau (150) raccordé à un premier orifice supérieur (1231) sur un côté inférieur de la partie saillante (120p) et configuré pour transférer le premier fluide,
dans lequel le premier tuyau (150) comprend :
une première partie (151) s'étendant vers le bas à partir du premier orifice supérieur (1231) de la plaque de recouvrement supérieure (120) ;
une deuxième partie (153) s'étendant à partir de la première partie (151) dans une direction croisant une direction dans laquelle s'étend la première partie (151) ; et
une troisième partie (155) s'étendant vers le haut à partir de la deuxième partie (153).

2. Ensemble élément de batterie (100) selon la revendication 1, dans lequel une partie du côté inférieur du bloc élément (110) est exposée vers l'extérieur à travers le trou d'évent (149) de la plaque de recouvrement inférieure (140).

3. Ensemble élément de batterie (100) selon la revendication 1 ou 2, dans lequel la plaque de recouvrement supérieure (120) comprend également un trou d'évent (129).

4. Ensemble élément de batterie (100) selon la revendication 3, dans lequel une partie du côté supérieur du bloc élément (110) est exposée vers l'extérieur à travers le trou d'évent (129) de la plaque de recouvrement supérieure (120).

5. Ensemble élément de batterie (100) selon l'une quelconque des revendications 1-4, comprenant en outre un premier support inférieur (181) disposé sous la deuxième partie (153) du premier tuyau (150) et supportant la deuxième partie (153) du premier tuyau (150).

6. Ensemble élément de batterie (100) selon la revendication 5, comprenant en outre un premier patin élastique (191) disposé entre la deuxième partie (153) du premier tuyau (150) et le premier support inférieur (181).

7. Ensemble élément de batterie (100) selon l'une quelconque des revendications 1-6, dans lequel une extrémité supérieure de la troisième partie (155) du premier tuyau (150) est une extrémité du premier tuyau (150) et est située sous le premier orifice supérieur (1231) de la plaque de recouvrement supérieure (120).

8. Ensemble élément de batterie (100) selon l'une quelconque des revendications 1-7, comprenant en outre un second tuyau (160) raccordé à un second orifice supérieur (1233) sur le côté inférieur de la partie saillante (120p) de la plaque de recouvrement supérieure (120), et configuré pour transférer le premier fluide, et
dans lequel l'un du premier tuyau (150) et du second tuyau (160) est configuré pour transférer le premier fluide provenant de l'extérieur vers le premier canal de refroidissement (123) de la plaque de recouvrement supérieure (120), et l'autre du premier ou du second tuyau (150, 160) est configuré pour transférer le premier fluide évacué du premier canal de refroidissement (123) de la plaque de recouvrement supérieure (120) vers l'extérieur,
le second tuyau (160) comprend :
une quatrième partie (161) s'étendant vers le bas à partir du second orifice supérieur (1233) de la plaque de recouvrement supérieure (120) ;
une cinquième partie (163) s'étendant à partir de la quatrième partie (161) dans une direction croisant une direction dans laquelle s'étend la quatrième partie (161) ; et
une sixième partie (165) s'étendant vers le haut à partir de la cinquième partie (163),
une extrémité supérieure de la sixième partie (165) du second tuyau (160) est une extrémité du second tuyau (160) et est située sous le second orifice supérieur (1233) de la plaque de recouvrement supérieure (120).

9. Ensemble élément de batterie (100) selon la revendication 8, comprenant en outre :
un second support inférieur (185) disposé sous la cinquième partie (163) du second tuyau (160) et supportant la cinquième partie (163) du second tuyau (160) ; et
un second patin élastique (193) disposé entre la cinquième partie (163) du second tuyau (160) et le second support inférieur (185).

10. Ensemble élément de batterie (100) selon l'une quelconque des revendications 1-9, dans lequel la plaque de recouvrement inférieure (140) comprend en outre une partie saillante (140p) dépassant d'un côté du bloc élément (110), et
une extrémité supérieure de la partie saillante (140p) de la plaque de recouvrement inférieure (140) est dotée d'un premier orifice inférieur (1431) dans lequel le second fluide est introduit et d'un second orifice inférieur (1433) duquel le second fluide est évacué.

11. Ensemble élément de batterie (100) selon l'une quelconque des revendications 1-10, dans lequel le boîtier (CA) comprend en outre une plaque de recouvrement latérale (130) faisant face à un côté latéral du bloc élément (110),
dans lequel la plaque de recouvrement latérale (130) est couplée à la plaque de recouvrement supérieure (120) et à la plaque de recouvrement inférieure (140) et comprend une bride de fixation (139) configurée pour être fixée à une structure de support externe.

12. Bloc-batterie (500) comprenant :
un boîtier de bloc-batterie (501) ; et
un ensemble élément de batterie (100) logé dans le boîtier de bloc-batterie (501), et incluant un bloc élément (110) avec une pluralité d'éléments de batterie (111) et un boîtier (CA) logeant le bloc élément (110),
dans lequel le boîtier (CA) comprend :
une plaque de recouvrement supérieure (120) faisant face à un côté supérieur du bloc élément (110) et incluant un premier canal de refroidissement (123) configuré de sorte qu'un premier fluide s'écoule à travers celui-ci ; et
une plaque de recouvrement inférieure (140) faisant face à un côté inférieur du bloc élément (110), et incluant un trou d'évent (149) et un second canal de refroidissement (143) configuré de sorte qu'un second fluide s'écoule à travers celui-ci,
**caractérisé en ce que**
la plaque de recouvrement supérieure (120) comprend en outre une partie saillante (120p) qui dépasse d'un côté du bloc élément (110), et
l'ensemble élément de batterie (100) comprend en outre un premier tuyau (150) raccordé à un premier orifice supérieur (1231) sur un côté inférieur de la partie saillante (120p) et configuré pour transférer le premier fluide,
dans lequel le premier tuyau (150) comprend :
une première partie (151) s'étendant vers le bas à partir du premier orifice supérieur (1231) de la plaque de recouvrement supérieure (120) ;
une deuxième partie (153) s'étendant à partir de la première partie (151) dans une direction croisant une direction dans laquelle s'étend la première partie (151) ; et
une troisième partie (155) s'étendant vers le haut à partir de la deuxième partie (153).

13. Bloc-batterie (500) selon la revendication 12, dans lequel le boîtier (CA) comprend en outre une plaque de recouvrement latérale (130) faisant face à un côté latéral du bloc élément (110),
dans lequel la plaque de recouvrement latérale (130) comprend une bride de fixation (139) configurée pour être fixée à une structure de support sur une paroi inférieure du boîtier de bloc-batterie (501),
la plaque de recouvrement inférieure (140) de l'ensemble élément de batterie (100) est espacée de la paroi inférieure du boîtier de bloc-batterie (501) d'un premier espace interposé entre celles-ci, et
le côté inférieur du bloc élément (110) est exposé vers le premier espace à travers le trou d'évent (149).

14. Bloc-batterie (500) selon la revendication 12 ou 13, dans lequel
l'ensemble élément de batterie (100) comprend en outre :
un second tuyau (160) raccordé à un second orifice supérieur (1233) sur le côté inférieur de la partie saillante (120p) de la plaque de recouvrement supérieure (120) et configuré pour transférer le premier fluide évacué du premier canal de refroidissement (123) vers l'extérieur.
